# EUROPEAN PATENT APPLICATION

(11) **EP 4 693 717 A1**
(43) Date of publication of application: **11.02.2026**
(21) Application number: 24889086.5
(22) Date of filing: 05.11.2024
(51) Int. Cl.: H01M 50/59, H01M 50/184, H01M 50/536, H01M 50/249

(54) **SECONDARY BATTERY AND DEVICE COMPRISING SAME**

(30) Priority: 09.11.2023 KR 20230154593
(71) Applicant: LG Energy Solution, Ltd., Seoul 07335 (KR)
(72) Inventor: SONG, Jieun, Daejeon 34122 (KR); KIM, Hyeon Jin, Daejeon 34122 (KR); HAN, Suenghoon, Daejeon 34122 (KR)
(74) Representative: Goddar, Heinz J.
(86) International application number: PCT/KR2024/017279
(87) International publication number: WO 2025/100898

(57) **Abstract**

A secondary battery may include: an electrode assembly including a plurality of electrodes, an electrode tab extending from at least one of the plurality of electrodes, and separators interposed between the plurality of electrodes: an electrode lead electrically connected to the electrode tab; and a protection part covering at least a part of the plurality of electrodes, at least a part of the electrode tab, and a part of the electrode lead, wherein at least a portion of the protection part is formed of an insulating material which is shrunk by a predetermined energy source. Other embodiments are also possible.

## Description

### TECHNICAL FIELD

The present disclosure relates to a secondary battery and a device comprising the same.

### BACKGROUND ART

Secondary batteries may be charged and discharged, and thus, are widely utilized in mobile devices such as a digital camera, a mobile phone, and a laptop, and in particular, have been recently gained attention as an energy source device of an electric vehicle, an energy storage system (ESS), or the like. As electric vehicles or ESS demand high-capacity and high-output power, medium-sized and large battery apparatuses are widely utilized, such as a battery module in which multiple secondary batteries are accommodated within a housing or a battery pack equipped with multiple battery modules.

A nickel-cadmium battery, a nickel-metal hydride battery, a nickel-hydrogen battery, and the like are commonly used as existing secondary batteries, and there is a recent tendency to increasingly use a lithium ion battery. For the lithium ion battery, a manner of fabricating an electrode by using copper, aluminum foil, or the like as a metal current collector of each of a positive electrode and a negative electrode and laminating a negative electrode active material or a positive electrode active material on both surfaces thereof may be mainly used.

Furthermore, in contrast, in a lithium-sulfur battery (Li-S battery) or a lithium-metal battery (Li-Metal battery), which are next-generation batteries, a negative electrode may be composed of lithium metal instead of being equipped with a separate current collector. In this case, since lithium has lower mechanical strength than a metal current collector of an existing negative electrode, there is a risk that a welding portion and the like of an electrode may be easily deformed or broken in a manufacturing process or a using process of a secondary battery.

### Detailed Description of the Invention

### Technical Goals

A post-processing method of attaching a welding portion, which is a connection point of an electrode lead and an electrode tab, by wrapping an adhesive tape on an area thereof is considered as an existing technique for improving durability, this taping method has a possibility that a chemical reaction between the adhesive tape and electrolyte may occur and battery performance may be degraded, and the manufacturing process is complicated.

In addition, even though only the welding portion is reinforced in the taping method, a portion of an electrode tab extending from an end portion of an electrode may not be protected, and thus, it is difficult to completely solve a disconnecting issue of a portion between the welding portion and the electrode, which is a relatively vulnerable point.

### Technical solutions

According to various exemplary embodiments of the present disclosure, provided is a secondary battery including an electrode assembly including a plurality of electrodes, an electrode tab extending from at least one of the plurality of electrodes, and a separator interposed between the plurality of electrodes, an electrode lead electrically connected to the electrode tab, and a protection part configured to cover at least a portion of the plurality of electrodes, at least a portion of the electrode tab, and a portion of the electrode lead, and at least a portion of the protection part may be formed of an insulating material shrunk by a predetermined energy source.

According to an exemplary embodiment, the at least a portion of the plurality of electrodes, at least the portion of the electrode tab, and the portion of the electrode lead, that are covered by the protection part, may form a continuous area or an overlapping area.

According to an exemplary embodiment, the secondary battery may further include a battery case where the electrode assembly and the protection part are accommodated and a sealing part is formed at an edge, and the protection part may be spaced apart from the sealing part of the battery case.

According to an exemplary embodiment, the protection part may include a first protection part configured to cover a bonding area of the electrode tab and the electrode lead and a second protection part configured to cover at least a portion of one of the plurality of electrodes, and an area, covered by the second protection part, of the one of the plurality of electrodes may be less than or equal to a quarter of an area of the one of the plurality of electrodes.

According to an exemplary embodiment, at least the portion of the protection part may include a first layer and a second layer that are configured to be stacked, and the first layer and the second layer may be formed of different materials from each other.

According to an exemplary embodiment, the electrode lead of the secondary battery may further include an insulating member at an area, and the protection part may be spaced apart by a predetermined gap from the insulating member.

According to an exemplary embodiment, the energy source may include a laser.

According to an exemplary embodiment, the electrode tab and the electrode lead may be electrically connected to each other by the energy source.

According to an exemplary embodiment, the protection part of the secondary battery may include a first protection part and a second protection part, and the second protection part may be configured to cover the at least a portion of the plurality of electrodes and at least the portion of the electrode tab, and the first protection part may be configured to cover at least a portion of the second protection part, at least the portion of the electrode tab, and the portion of the electrode lead, and may be formed of an insulating material shrunk by the predetermined energy source.

According to various exemplary embodiments of the present disclosure, provided is a secondary battery including an electrode assembly including a plurality of electrodes, an electrode tab extending from at least one of the plurality of electrodes, and a separator interposed between the plurality of electrodes, a battery case where the electrode assembly is accommodated and a sealing part formed at an edge, and an electrode lead which is electrically connected to the electrode tab and of which at least a portion thereof protrudes outside the battery case, and the electrode tab and the electrode lead may be bonded to each other through laser welding, and a portion that is bonded may be covered by an insulating material shrunk into tight contact by the laser welding.

According to various exemplary embodiments of the present disclosure, provided is a device including the secondary battery according to various exemplary embodiments described above.

According to various exemplary embodiments of the present disclosure, it is possible to ensure durability and stability of a secondary battery by covering a portion thereof with relatively vulnerable durability in the secondary battery through a separate protection part of plastic material in order to prevent an electrode tab portion from being easily disconnected, even by external impact.

Further, it is possible to easily mount a protection part in a secondary battery in a simple manner, thereby replacing an existing cumbersome taping operation.

Further, it is possible to effectively protect not only a welding portion, which is a point where an electrode lead and an electrode tab are bonded in a secondary battery, but also an electrode tab portion extending from an end portion of an electrode.

Further, it is possible to carry out an operation of mounting a protection part in a secondary battery and an operation of welding an electrode lead and an electrode tab at once, thereby simplifying a manufacturing process and reducing a manufacturing cost.

Further, it is possible, by stacking two or more layers formed of different materials from each other and forming a protection part, to easily mount the protection part and easily ensure a water resistance property, a moisture resistance property, and an electrical insulation property, of an area to be protected.

### BRIEF DESCRIPTION OF DRAWINGS

FIG. 1 is a schematic perspective view of a secondary battery 10 according to an exemplary embodiment of the present disclosure.
FIG. 2A is schematic top view illustrating a state before mounting a protection part in the secondary battery 10 according to an exemplary embodiment of the present disclosure.
FIG. 2B is a schematic side view illustrating a state before mounting a protection part in the secondary battery 10 according to an exemplary embodiment of the present disclosure.
FIGS. 3A to 3C are schematic top views for illustrating a protection part mounted in the secondary battery 10 according to various exemplary embodiments of the present disclosure.
FIG. 4A is a schematic side view of the secondary battery 10 corresponding to FIG. 3A.
FIG. 4B is a schematic side view of the secondary battery 10 corresponding to FIG. 3C.
FIGS. 5A to 5D are schematic top views illustrating a protection part mounted in the secondary battery 10 according to various exemplary embodiments of the present disclosure.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the exemplary embodiments described in the specification and the configurations illustrated in the drawings are no more than the most preferred exemplary embodiments of the present disclosure and do not fully cover the technical idea of the present disclosure. Accordingly, it should be understood that there may be various alternatives, equivalents, and modification examples when this application is filed.

Like reference numerals or signs in each drawing attached to the specification may refer to components or elements performing substantially like functions. For convenience of description and understanding, the same reference numeral or sign may be used for description in different exemplary embodiments. In other words, even though elements with the same reference numeral are illustrated in a plurality of drawings, not all of the plurality of drawings may represent a single exemplary embodiment.

In the following description, a singular expression includes a plural expression unless apparently or otherwise defined by context. It should be understood that terms such as "comprise or include" and "form or compose" are intended to indicate the presence of a feature, a number, a step, an operation, an element, a component, or a combination thereof which are described in the specification and not intended to previously exclude the possibility of the presence or addition of one or more other features, numbers, steps, operations, elements, components, or combinations thereof.

In addition, expressions such as upper side, upper portion, above, lower side, lower portion, below, side surface, front surface, and rear surface hereinafter are represented with respect to a direction illustrated in a drawing and may be represented otherwise when the orientation of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, using order, arrangement sequence, or the like of an element combined with an ordinal number is not to be construed as limited by the ordinal number. In some cases, each ordinal number may also be used by replacing each other.

Hereinafter, exemplary embodiments of the present disclosure are described with reference to the accompanying drawings. However, the present disclosure is not limited to the exemplary embodiments described. For example, a person of ordinary skill in the art who understands the idea of the present disclosure may suggest other exemplary embodiments included within the scope of the idea of the present disclosure through the addition, change, or deletion of an element, which, however, are also included within the scope of the present disclosure. The shapes, sizes, and the like of elements in the drawings may be exaggerated for clearer description.

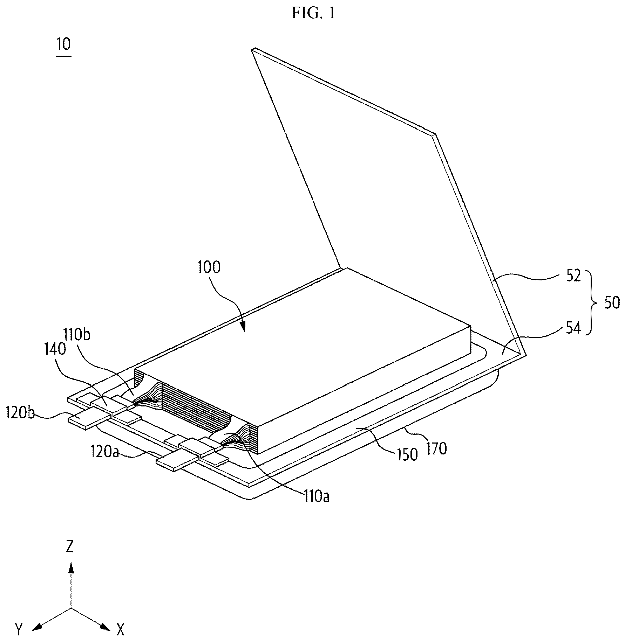

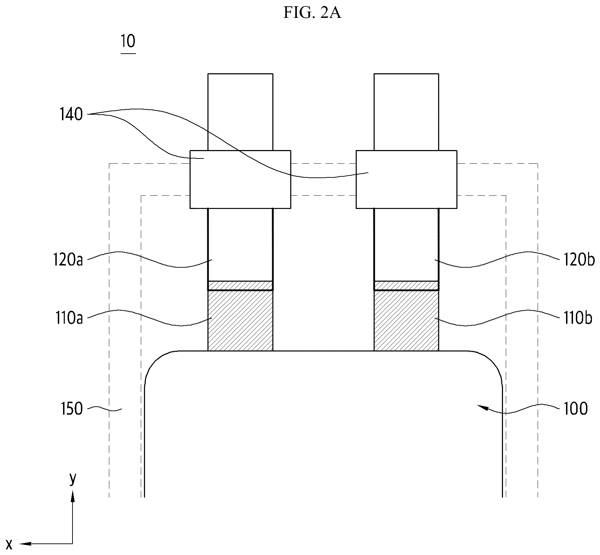

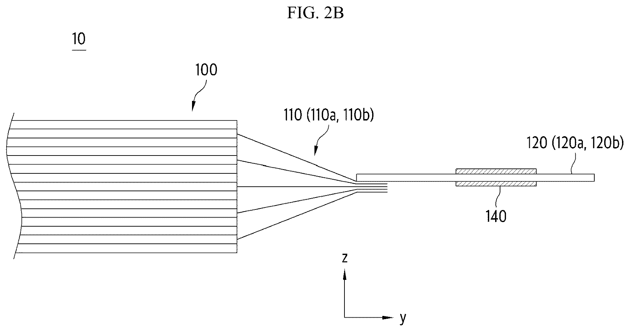

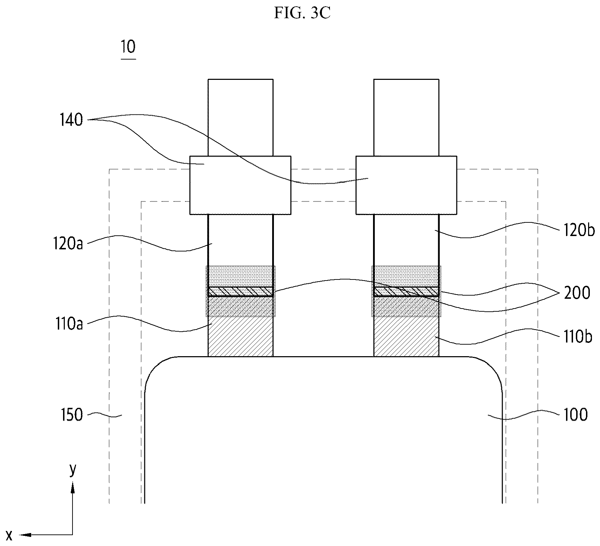

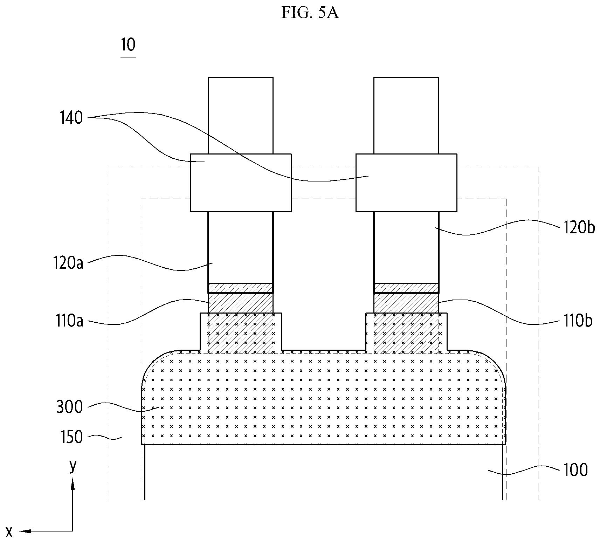

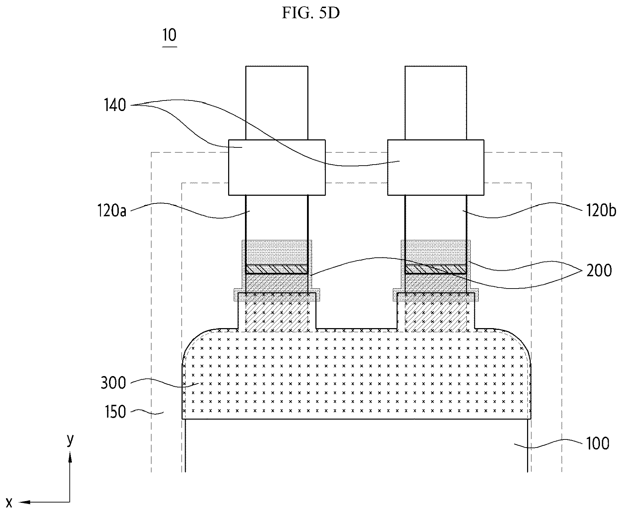

FIG. 1 is a schematic perspective view of a secondary battery 10 according to an exemplary embodiment of the present disclosure. FIGS. 2A and 2B are a schematic front or top view and a schematic side view, respectively, illustrating a state before mounting a protection part (for example, a first protection part 200 of FIG. 3C or FIG. 5D and a second protection part 300 of FIG. 5D) in the secondary battery 10 according to an exemplary embodiment of the present disclosure. In FIGS. 2A and 2B, illustrating a case (for example, a case 50 of FIG. 1) of the secondary battery 10 is omitted for convenience of description.

Referring to FIGS. 1 to 2B, the secondary battery 10 according to various exemplary embodiments may include an electrode assembly 100 and the battery case 50 in which the electrode assembly 100 is accommodated.

According to various exemplary embodiments, the electrode assembly 100 may include a plurality of electrodes, an electrode tab 110 (for example, a positive electrode tab 110a and a negative electrode tab 110b) extending from at least one of the plurality of electrodes, and a separator interposed between the plurality of electrodes.

The plurality of electrodes may be composed of a positive electrode and a negative electrode and may have, for example, a structure in which the positive electrode, the separator, and the negative electrode are stacked in sequence.

In an exemplary embodiment, the negative electrode may include a negative electrode current collector, and a negative electrode active material stacked on the negative electrode current collector. For example, the negative electrode may be formed by applying a mixture including at least the negative electrode active material, a conductive material, and a binder to the negative electrode current collector formed of a material such as a copper alloy.

In another exemplary embodiment, the negative electrode may also be composed of an integrated lithium metal sheet, instead of being equipped with the negative electrode current collector and the negative electrode active material each separately. The lithium metal sheet is a flat sheet member composed of lithium metal (a material of lithium or an alloy including lithium), and the negative electrode and the negative electrode tab 110b formed to extend from an end portion of the negative electrode may all be composed of lithium metal in an integrated form.

When the negative electrode is implemented in the integrated form composed of the lithium metal sheet as above, the negative electrode current collector formed of nickel (Ni), aluminum (Al), copper (Cu), and the like may be omitted from the negative electrode, which may help reduce weight of the secondary battery 10 and have an advantage with regard to high energy density. However, when the negative electrode is composed of lithium metal alone, the possibility of physical damage due to a soft property of lithium increases (in other words, a characteristic of lithium with low mechanical strength), and such damage may occur in manufacturing or during use. According to various exemplary embodiments of the present disclosure, by applying the protection part (for example, the first protection part 200 of FIG. 3C or the protection parts 200, 300 of FIG. 5D) to portions with a high possibility of physical damage in the negative electrode, the negative electrode may be effectively protected, and thus, the above issue may be easily resolved.

In an exemplary embodiment, a positive electrode may include a positive electrode current collector, and a positive electrode active material stacked on the positive electrode current collector. For example, the positive electrode may be formed by applying a mixture including at least the positive electrode active material, a conductive material, and a binder to the positive electrode current collector formed of a material such as an aluminum alloy. For example, the positive electrode active material may be composed of lithium manganese oxide, lithium cobalt oxide, lithium nickel oxide, lithium iron phosphate, or a compound or a mixture including one or more thereof. As another example, a sulfur-based material with an S-S bond may also be used for the positive electrode active material.

Each separator of an insulating material may be interposed between the positive electrode and the negative electrode. The separator may be configured to not only prevent an electrical short circuit between electrodes, but may also be impregnated with an electrolyte so that ions may pass through. For example, the separator may be formed of a porous polymer film or a porous nonwoven fabric. However, the separator applied to the secondary battery according to various exemplary embodiments of the present disclosure is not necessarily limited to the above materials, and various materials that may be generally applied to secondary batteries may also be used.

According to various exemplary embodiments, the electrode tab 110 may include the positive electrode tab 110a extending from an end portion of the positive electrode and the negative electrode tab 110b extending from the end portion of the negative electrode. The electrode tab 110 may be electrically connected to an electrode lead 120 that serves as a terminal in the secondary battery 1. For example, the positive electrode tab 110a may be formed of aluminum (Al) material, and the negative electrode tab 110b may be formed of copper (Cu) or lithium (Li) material.

In various exemplary embodiments, the secondary battery 10 may include a unidirectional secondary battery with a form in which the positive electrode tab 110a and the negative electrode tab 110b of the electrode tab 110 extend toward an identical direction, and a bidirectional secondary battery with a form in which the positive electrode tab 110a and the negative electrode tab 110b extend in opposite directions. The bidirectional secondary battery generally requires securing more space compared to the unidirectional secondary battery, and thus, may have decreased energy density. In contrast, although the unidirectional secondary battery may have relatively high energy density, the positive electrode tab 110a and the negative electrode tab 110b are formed in the same direction, and thus, there is a possibility of a short circuit issue occurring due to a lithium dendrite that may grow from the negative electrode and come into contact with the positive electrode tab 110a while charging and discharging the battery. However, in the secondary battery 10 according to various exemplary embodiments of the present disclosure, since the positive electrode tab 110a and the negative electrode tab 110b may be physically spaced apart and electrically isolated by the protection part, the above issue may be effectively prevented, even in a bidirectional secondary battery structure when applied thereto.

The secondary battery 10 may include the electrode lead 120 electrically connected to the electrode assembly 100 (for example, electrode tab 110 of the electrode assembly 100).

The electrode lead 120 may include a positive electrode lead 120a and a negative electrode lead 120b. For example, the positive electrode lead 120a may be electrically connected to the positive electrode tab 110a extending from the positive electrode, and the negative electrode lead 120b may be electrically connected to the negative electrode tab 110b extending from the negative electrode. For this, the electrode lead 120 may be formed of a conductive metal material. For example, the electrode lead 120 may be formed of at least one of nickel, copper, nickel-plated copper, and aluminum.

The electrode lead 120 and the electrode tab 110 may be electrically connected through various welding manners including ultrasonic welding, but a physical fastening manner using a rivet or the like may also be applied in addition thereto. When the secondary battery 10 includes the protection part (for example, the first protection part 200 of FIGS. 3C, 4B, and 5D) in an exemplary embodiment of the present disclosure, the electrode lead 120 and the electrode tab 110 may also be welded by applying a laser to the protection part through a laser welding manner, and in this case, the protection part may also be fixed to a welding portion simultaneously with being welded by laser irradiation.

In various exemplary embodiments, an insulating member 140 may be disposed at an area (for example, an area corresponding to a sealing part 150) of the electrode lead 120. For example, the insulating member 140 may be formed of a material (for example, a thermoplastic resin) having an insulating property and an adhesive property. The insulating member 140 may be bonded to the sealing part 150 of the case 30 while surrounding a portion of the electrode lead 120 and thus may ensure electrical insulation between the electrode lead 120 and the case 30. In addition, the insulating member 140 may seal the case 30 at an area corresponding to a portion where the electrode lead 120 protrudes outside from the inside of the case 30, and simultaneously, serve as a buffer for preventing damage to the electrode lead 120 caused by the sealing part 150.

Case 50 may include an accommodation part 170 which is an internal space where the electrode assembly 100 may be accommodated and the sealing part 150 which is an area sealed to shield the electrode assembly 100 in at least a portion of an edge of the accommodation part 170. For example, case 50 may be formed by coupling an upper case 52 and a lower case 54. For example, the upper case 520 and the lower case 54 may be coupled to each other at an area of the sealing part 150 by pressure or by thermal bonding, and accordingly, an inflow of external foreign substances or moisture into the electrode assembly 100 disposed in the accommodation part 170 may be blocked.

Case 50 may include, for example, a pouch-type case formed of a soft material (for example, an aluminum laminate sheet). However, various exemplary embodiments of the present disclosure are not limited to this pouch-type case and may also include a can-shaped (or rectangular) case or a cylindrical case composed of a metal material such as aluminum, and various types such as a stack-type electrode assembly or a jelly-roll type electrode assembly may be applied to the electrode assembly 100 depending on each case type.

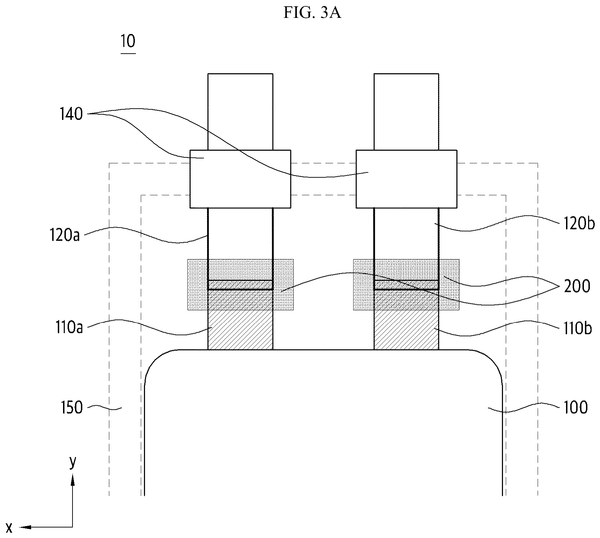

FIGS. 3A to 3C are schematic front or top views for illustrating a protection part mounted in the secondary battery 10 according to various exemplary embodiments of the present disclosure.

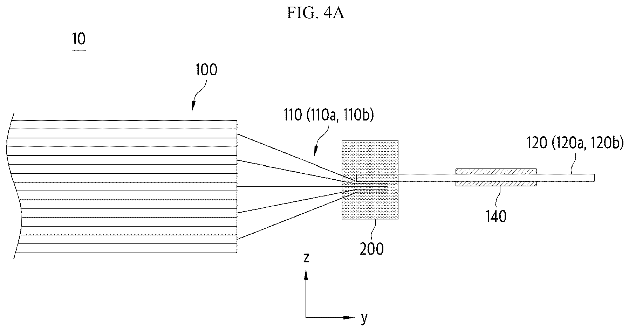

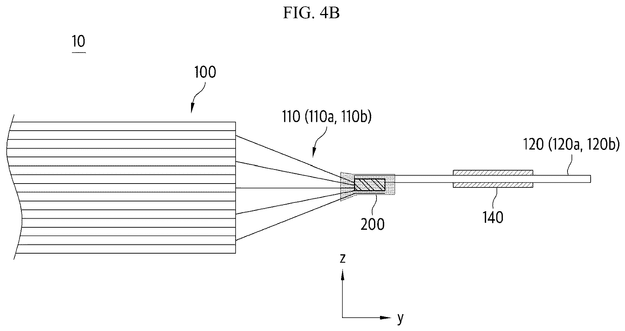

FIGS. 4A and 4B are schematic side views of the secondary battery 10 corresponding to FIGS. 3A and 3C, respectively. The case (for example, case 50 of FIG. 1) may be understood as being omitted in each drawing of FIGS. 3A to 4B) for convenience of description.

Referring to FIGS. 3A to 4B, the secondary battery 10 according to various exemplary embodiments may include the first protection part 200 for protecting at least a portion of the electrode lead 120 (for example, the positive electrode lead 120a and the negative electrode lead 120b) and at least a portion of the electrode tab 110 (for example, the positive electrode tab 110a and the negative electrode tab 110b).

In various exemplary embodiments, the first protection part 200, can be irradiated with heat, ultraviolet (UV), an ultrasonic wave, a laser, or the like, and may be shrunk into tight contact with a portion of the electrode lead 120 and a portion of the electrode tab 110 thereby, and may be formed of a material having an electrical insulation property and a flame retardant property. For example, the first protection part 200 may be formed of at least one of a polyolefin-based polymer (for example, chlorinated polyolefin and crosslinked polyolefin), a fluorine-containing resin (for example, fluoroelastomer and fluoropolymer), crosslinked polyvinylidene fluoride, crosslinked polyether block amide (PEBA), a crosslinked elastomer, a polyethylene/polyester composite, silicone rubber, an elastomer, polytetrafluoroethylene (PTFE), and polyvinylchloride (PVC).

For example, in various exemplary embodiments of the present disclosure, the first protection part 200 may be disposed to surround an area including at least an outer surface of a portion where the electrode lead 120 and the electrode tab 110 overlap as illustrated in FIGS. 3A and 4A. The first protection part 200 may have a tube shape to surround an area to be protected corresponding to each of the positive electrode tab 110a and the negative electrode tab 110b. For example, the first protection part 200, before being shrunk, may have a tube shape with an inner diameter greater than an actual diameter of the overlapping portion of the electrode lead 120 and the electrode tab 110 to be protected. The electrode lead 120 and the electrode tab 110 may be in a state such that they are not bonded to each other through welding or the like.

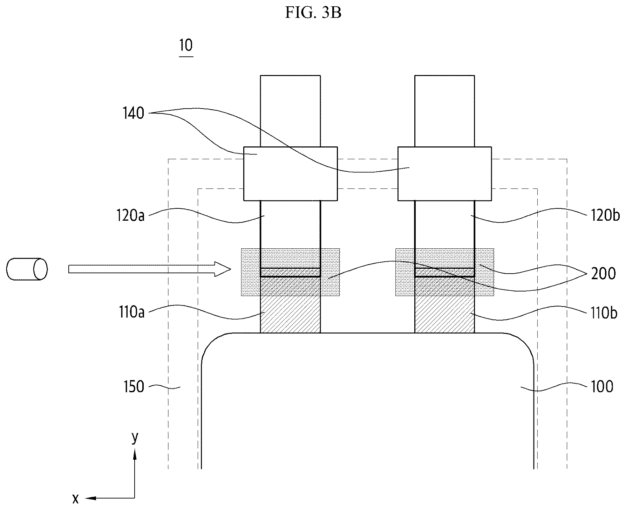

Subsequently, as illustrated in FIG. 3B, a predetermined energy source for shrinking the first protection part 200 may be applied to the first protection part 200 in various exemplary embodiments.

For example, in an exemplary embodiment, a laser may be used as the energy source for shrinking the first protection part 200 when manufacturing the secondary battery 10. In this case, as the overlapping portion of the electrode lead 120 and the electrode tab 110 is irradiated with the laser, the electrode lead 120 and the electrode tab 110 may be bonded, and simultaneously, energy may also be applied to the first protection part 200 surrounding the outer surface of the overlapping portion of the electrode lead 120 and the electrode tab 110, thus shrinking the first protection part 200 such that it becomes fixed and into tight contact to a protection portion (in other words, the overlapping portion of the electrode lead 120 and the electrode tab 110) as illustrated in FIGS. 3C and 4B. In other words, in various exemplary embodiments of the present disclosure, as the outer surface is surrounded by the first protection part 200, and is then irradiated with the laser in a state of the electrode lead 120 and the electrode tab 110 being unbonded, both a welding operation of the electrode lead 120 and the electrode tab 110 and a fixing operation of the first protection part 200 may be performed simultaneously.

As the first protection part 200 covers a connection portion of the electrode lead 120 and the electrode tab 110 at the outer surface as above, peeling or tearing of a bonded portion may be prevented, which thus may improve safety of the secondary battery 10.

For example, a surrounded area of the first protection part 200 may have a length longer than a length of a bonding area of the electrode tab 110 and the electrode lead 120 to cover an entire area of a portion (in other words, a welding portion) where the electrode tab 110 and the electrode lead 120 are bonded in a welded manner. For example, the first protection part 200 may have a length 1 millimeters (mm) to 4 mm longer than the bonding area, and for example, when the bonding area of the electrode tab 110 and the electrode lead 120 has a length of about 3 mm, the first protection part 200 may have a length of about 4 mm to 7 mm.

In the secondary battery 10 according to other exemplary embodiments, UV, heat, an ultrasonic wave, or the like may also be used as the energy source for shrinking the first protection part 200 in addition to the laser. For example, a welding operation may be performed first for the electrode lead 120 and the electrode tab 110 in some cases before the first protection part 200 is positioned in a state as shown in FIG. 3A, and in this case, the energy source for shrinking the first protection part 200 is not limited to the laser.

In an exemplary embodiment, the first protection part 200 may be spaced apart by a predetermined gap from the insulating member 140 formed at an area of the electrode lead 120, which may prevent hindering the role of the insulating member 140 in a sealing process (e.g., sealing to the portion 150 of the case 50).

The first protection part 200 applied to the secondary battery 10 according to various exemplary embodiments may also be configured in a stacked form of two or more layers having different properties. When the first protection part 200 has a stacked form of two or more layers, for example, an inner layer may be formed of a material with an excellent shrinkage property, and an outer layer may be formed of a material whose water resistance property, a moisture resistance property, and/or an electrical insulation property are excellent.

FIGS. 5A to 5D are schematic front views for illustrating a protection part mounted in the secondary battery 10 according to various exemplary embodiments of the present disclosure.

Referring to FIG. 5A, the secondary battery 10 according to various exemplary embodiments may include a second protection part 300 for integrally covering an electrode (for example, a positive electrode and a negative electrode) and the electrode tab 110 (for example, the positive electrode tab 110a and the negative electrode tab 110b) extending from each electrode.

In exemplary embodiments, the second protection part 300 may have a shape including two holes corresponding to each electrode tab 110 (in other words, the positive electrode tab 110a and the negative electrode tab 110b) at one side and including one large hole corresponding a body part of the electrode at another side, in order to integrally cover a portion of the electrode and a portion of the electrode tab 110 extending from an end portion of the electrode.

For example, the second protection part 300 may be formed of at least one of polypropylene (PP) or polyethylene (PE). However, without being limited to these materials, various polymer plastic materials having a stiffness property and a weight property to protect the end portion of the electrode may be used. As an example, the second protection part 300 may also be formed of a plastic material having a property of being shrinkable by an energy source, such as heat, similarly to the first protection part 200. As another example, the second protection part 300 may also be formed of a material with a characteristic of being harder than the first protection part 200, although not having a thermal shrinkage property.

In an exemplary embodiment, the second protection part 300 may be fixed to the electrode assembly 100 through a separate component, such as a clip, while covering the portion of the electrode and the portion of the electrode tab 110 extending from the end portion of the electrode. Alternatively, the second protection part 300, as the first protection part 200 connected thereto is fixed to the bonding area, may be indirectly fixed to the electrode assembly 100.

An area (or length) of a portion surrounding the body part of the electrode in the second protection part 300 may be configured to only cover less than or equal to about a quarter of an entire area (or length) of the body part of the electrode.

Accordingly, a point (in other words, a portion extending from the end portion of the electrode to the electrode tab 110) vulnerable to external impact following the welding portion in the secondary battery 10 may be effectively protected, and degradation of energy efficiency due to an increase in the weight of subsidiary materials by unnecessarily covering a portion (for example, a lower end portion of the body part of the electrode) not vulnerable to the external impact may be prevented.

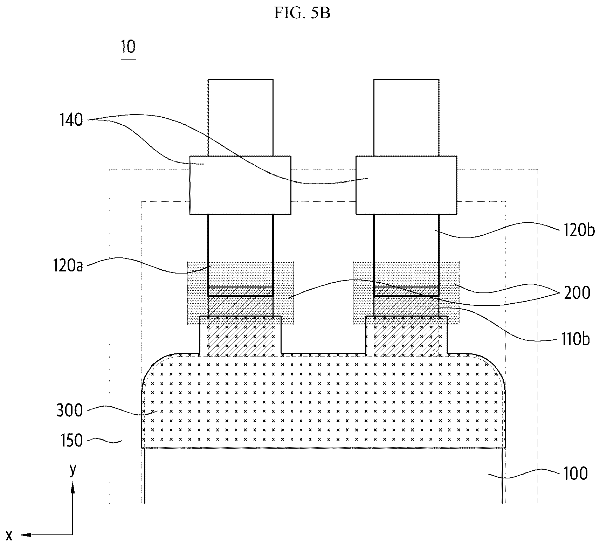

Referring to FIGS. 5B to 5D, in another exemplary embodiment, the secondary battery 10 may also include each of the second protection part 300 and the first protection part 200.

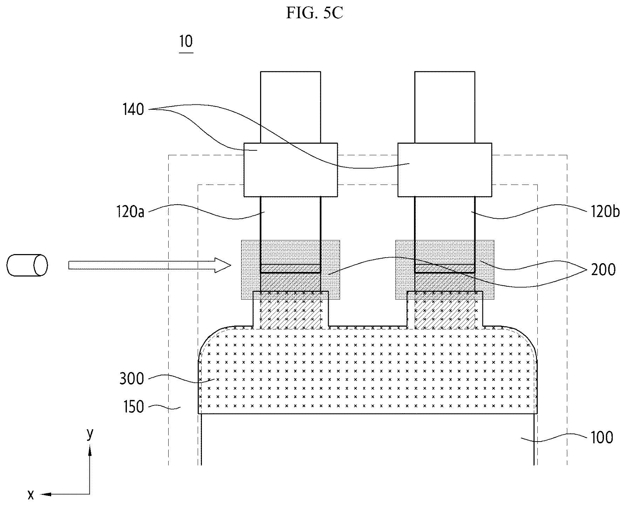

For example, as illustrated in FIGS. 5B and 5C, in a state of the second protection part 300 covering the portion of the electrode of the secondary battery 10 and the portion of the electrode tab 110, the first protection part 200 may be disposed overlap at least a portion of the second protection part 300, and the overlapping portion of the electrode tab 110 and the electrode lead 120, and then, the energy source may be applied to shrink the first protection part 200. Accordingly, the first protection part 200 may be fixed into tight contact to a covered area such as the portion of the second protection part 300 and the overlapping portion of the electrode tab 110 and the electrode lead 120, and through this, the second protection part 300 may also be indirectly fixed to a predetermined portion of the electrode assembly 100 such as the electrode tab 110.

To achieve an effect of fixing the second protection part 300 along with tight contact and fixing of the first protection part 200 as above, at least portions of areas protected by the first protection part 200 and the second protection part 300 may overlap in the secondary battery 10 according to an exemplary embodiment of the present disclosure.

When the laser is adopted as the energy source for shrinking the first protection part 200, there may be an advantage that the first protection part 200 and the second protection part 300 may be fixed, and simultaneously, welding for bonding the electrode lead 120 and the electrode tab 110 may also be performed by the laser irradiation. However, the energy source for shrinking the first protection part 200 is not limited to this laser, and for example, welding the electrode lead 120 and the electrode tab 110 in an exemplary embodiment may be carried out after the second protection part 300 covers the portion of the electrode and the portion of the electrode tab 110, and then, after covering the first protection part 200 to cover the portion of the second protection part 300 and the welding portion, the first protection part 200 may also be fixed (and the second protection part 300 may be fixed by fixing the first protection part 200) using various energy sources such as heat and UV.

In various exemplary embodiments of the present disclosure, the secondary battery 10 may be charged and discharged and may include a pouch-type secondary battery having a structure where an electrode assembly is accommodated within a pouch with flexibility, a rectangular secondary battery where an electrode assembly is accommodated within a rectangular case having predetermined stiffness, or a cylindrical secondary battery where an electrode assembly is accommodated within a cylindrical case. While the pouch-type secondary battery is described with respect to a secondary battery of a form stacked in one direction in this specification, this is merely an exemplary description, and various exemplary embodiments of the present disclosure are not limited to this pouch-type secondary battery.

The secondary battery 10 according to various exemplary embodiments of the present disclosure and a battery module or a battery pack including the same may be applied to various devices. For example, the secondary battery 10 according to various exemplary embodiments of the present disclosure may be applied to the devices including transportation means such as electric bicycles, electric cars, and hybrid cars, but is not limited thereto, and may be applied to various types of devices that may use the secondary battery 10.

While terms indicating directions such as up and down are used in this specification, it is apparent to those of ordinary skill in the art with regard to the present disclosure that these terms are merely for convenience of description and may vary depending on a position of a corresponding object, a location of a viewer, or the like.

While various exemplary embodiments of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned exemplary embodiments may be implemented with some elements removed, and each exemplary embodiment may be implemented in combination with each other.

## Claims

1. A secondary battery comprising:
an electrode assembly comprising a plurality of electrodes, an electrode tab extending from at least one of the plurality of electrodes, and a separator interposed between the plurality of electrodes;
an electrode lead electrically connected to the electrode tab; and
a protection part configured to cover at least a portion of the plurality of electrodes, at least a portion of the electrode tab, and a portion of the electrode lead,
wherein at least a portion of the protection part is formed of an insulating material that is shrinkable by a predetermined energy source.

2. The secondary battery of claim 1,
further comprising a battery case where the electrode assembly and the protection part are accommodated and a sealing part is formed at an edge of the case,
wherein the protection part is spaced apart from the sealing part of the battery case.

3. The secondary battery of claim 1,
wherein the protection part comprises:
a first protection part configured to cover a bonding area of the electrode tab and the electrode lead; and
a second protection part configured to cover at least a portion of one of the plurality of electrodes, and
wherein an area, covered by the second protection part, of the one of the plurality of electrodes is less than or equal to a quarter of an area of the one of the plurality of electrodes.

4. The secondary battery of claim 1,
wherein the at least a portion of the plurality of electrodes, at least the portion of the electrode tab, and the portion of the electrode lead, which are covered by the protection part, form a continuous area or an overlapping area.

5. The secondary battery of claim 1,
wherein at least the portion of the protection part includes a first layer and a second layer that are configured to be stacked, and
wherein the first layer and the second layer are formed of different materials from each other.

6. The secondary battery of claim 1,
wherein the electrode lead further includes an insulating member at an area, and
wherein the protection part is spaced apart by a predetermined gap from the insulating member.

7. The secondary battery of claim 1,
wherein the energy source comprises a laser.

8. The secondary battery of claim 1,
wherein the protection part includes a first protection part and a second protection part,
wherein the second protection part is configured to cover the at least a portion of the plurality of electrodes and at least the portion of the electrode tab, and
wherein the first protection part is configured to cover at least a portion of the second protection part, at least the portion of the electrode tab, and the portion of the electrode lead and is formed of an insulating material that is shrinkable by the predetermined energy source.

9. The secondary battery of claim 1,
wherein the electrode tab and the electrode lead are electrically connected to each other by the energy source.

10. A secondary battery comprising:
an electrode assembly comprising a plurality of electrodes, an electrode tab extending from at least one of the plurality of electrodes, and a separator interposed between the plurality of electrodes;
a battery case where the electrode assembly is accommodated and a sealing part is formed at an edge of the battery case; and
an electrode lead which is electrically connected to the electrode tab and of which at least a portion thereof protrudes outside the battery case,
wherein the electrode tab and the electrode lead are bonded to each other through a manner of laser welding, and a portion that is bonded is covered by an insulating material shrunk into tight contact by the laser welding.

11. A device comprising the secondary battery according to claims 1 to 10.
